# EUROPEAN PATENT SPECIFICATION

(11) **EP 2 389 523 B1**
(45) Date of publication and mention of the grant of the patent: **01.05.2013**
(21) Application number: 10704089.1
(22) Date of filing: 26.01.2010
(51) Int. Cl.: F16D 13/48

(54) **A VEHICLE CLUTCH WITH VARIABLE LEVER RATIO**
FAHRZEUGKUPPLUNG MIT VARIABLER HEBELÜBERSETZUNG
EMBRAYAGE DE VÉHICULE À RAPPORT DE LEVIER VARIABLE

(30) Priority: 26.01.2009 US 147401 P
(43) Date of publication of application: 30.11.2011
(73) Proprietor: Volvo Lastvagnar AB, 405 08 Göteborg (SE)
(72) Inventor: CARLSSON, Lars-Erik, SE-433 44 Partille (SE); SJÖQVIST, Fredrik, SE-423 52 Torslanda (SE)
(74) Representative: Fröhling, Werner Otto
(86) International application number: PCT/EP2010/000446
(87) International publication number: WO 2010/084024

(56) References cited:
- EP-A1- 0 185 176
- DE-A1- 19 708 041
- DE-A1- 19 941 837
- DE-C2- 4 092 382
- FR-A1- 2 860 844
- FR-A1- 2 865 514
- GB-A- 2 222 439
- US-A- 4 157 749

## Description

### TECHNICAL FIELD OF THE INVENTION

The present invention relates generally to a vehicle clutch with a lever ratio that varies during pivoting movement of clutch levers as set out in the preamble of claim 1.

A clutch is utilized to selectively transmit rotation between a propulsion unit, such as a combustion engine, and a transmission. When the clutch is engaged, the clutch lever presses a pressure plate to engage adjacent clutch disc (or discs if twin-disc), transmitting torque between the engine and the transmission. When the clutch is disengaged, the clutch lever is lifted from the pressure plate, releasing the pressure plate from the clutch disc and allowing the clutch disc to rotate relative to the flywheel and the clutch cover, disengaging the propulsion unit from the transmission.

The clutch lever provides a force to the pressure plate which is proportional to the lever ratio. A proper lever ratio selection of the clutch lever is important for good clutch performance. In some prior art clutch assemblies, the clutch lever is usually designated to produce a constant lever ratio.

Known solutions to clutch control problems have focused on lowering dead volume in clutch actuator, increasing the force in the lever spring, lowering the hysteresis for example lowering friction etc. Additionally, lowering the losses in geometrical design of the air flow way for said clutch actuator has been sought by others. Furthermore, increased exhaust area of said clutch actuator has been performed.

Additionally, some solutions have focused on mounting an extra offset spring on the clutch housing and additionally or alternately an extra over centre spring in the pedal box.

It is important that the lever ratio be large enough to transmit torque and create an acceptable clamp load level. However, if the lever ratio is large, the pressure plate lift decreases as there is less clearance, or clutch lift, between the pressure plate and the flywheel. For this reason, if the lever ratio is too large, the probability of clutch drag increases. Generally, optimizing clamp load is prioritized over clutch lift, but these competing factors do limit the design of clutches.

A prior art solution is disclosed in US6805228 where the lever shape is defined by the angle formed by lines extending from the outer point to the intermediate center of curvature and from the outer point to the inner center of curvature. The clutch levers provide force to the pressure plate which is proportional to a lever ratio. The lever ratio is defined by the radial distance from the inner center of curvature to the outer point divided by the radial distance from the intermediate center of curvature to the outer point. As the clutch levers have the outer point, the intermediate center of curvature and the inner center of curvatures non co-linear, the lever ratio changes as the lever position changes. The clutch levers are designed such that as the clutch levers move from an engaged position to a disengaged position, the lever ratio decreases. As the lever ratio is variable, it is possible to improve both clamp load and clutch lift by selecting the lever shape and changing the lever position. When the clutch is engaged, the lever ratio is large, allowing for large clamp load. When the clutch is disengaged, the lever ratio is small, allowing for large clutch lift. Accordingly, the arrangement according to US6805228 provides a clutch lever with a lever ratio that varies during movement of the clutch lever to maximize both clamp load and clutch lift.

DE19708041 and DE4092382 both disclose the features in the preamble of claim 1, where a vehicle clutch comprises a clutch disc with a moveable pressure plate and a plurality of clutch levers. An actuator is arranged to cause said pressure plate to move by pivoting said clutch levers;
where each of said clutch levers are pivotable around:
- a first fulcrum, which is fixed to a clutch housing;
- a second fulcrum, which is fixed to said pressure plate,
- and a third fulcrum, which is part of said actuator;
and where a pivot surface of each of said fulcrums around which said clutch levers pivot with a rolling action over said pivot surface is defined by a radius, which measures from a geometrical centre in each of said fulcrums and out to said pivot surface. A magnitude of said radius varies along said pivot surface in order to have a lever ratio of said clutch levers that varies as said clutch levers pivot.

There is a need to provide an alternative solution to a vehicle clutch where the clutch lever ratio varies in an alternative way during movement of the clutch lever and where the solution is easy to adapt to different types of clutches.

### SUMMARY OF THE INVENTION

The primary object of the present invention is to provide an alternative solution to a vehicle clutch where the clutch lever ratio varies very quickly during movement of the clutch lever.

This is achieved by a device as discussed in the introduction, the characteristics of which are defined by claim 1. The dependent claims describe preferred embodiments and developments of the device according to the invention.

The device according to the invention is a device for a vehicle clutch comprising:
at least one clutch disc to be selectively brought into and out of engagement;
a moveable pressure plate to selectively squeeze said at least one clutch disc into and out of engagement in order to drivingly connect and disconnect a propulsion unit to driving wheels;
a plurality of clutch levers to selectively cause said pressure plate to move;
an actuator to cause said pressure plate to move by pivoting said clutch levers;
where each of said clutch levers are pivotable around:
   - a first fulcrum, which is part of an element firmly attached to said clutch housing;
   - a second fulcrum, which is part of an element firmly attached to said pressure plate,
   - and a third fulcrum, which is part of an element firmly attached to said actuator;
where a pivot surface of each of said fulcrums around which said clutch levers pivot with a rolling action over said pivot surface is defined by a radius, which measures from a geometrical centre in each of said fulcrums and out to said pivot surface, and where a magnitude of at least one of said radius varies along said pivot surface in order to have a lever ratio of said clutch levers that varies as said clutch levers pivot, characterized in that said radius where the magnitude varies is varied so that when following a contact point in said rolling action between said clutch lever and said belonging pivot surface during a clutch stroke from disengaged to engaged position or from engaged to disengaged position said magnitude of said radius is during a first part of said stroke constant, during a second part of said stroke continuously decreasing, during a third part of said stroke increasing and during a fourth and last part of said stroke constant.

### BRIEF DESCRIPTION OF THE DRAWINGS

Exemplary arrangements conducted and configured according to the advantageous solutions presented herein are depicted in the accompanying drawings wherein:

Figures 1a and 1b illustrates an exemplary figure of half section of a clutch according to prior art, where said clutch has a normally closed position, that is of a pushing type and direct type;

Figures 2a and 2b illustrate an exemplary diagram of a clutch lever not being part of the invention;

Figure 2c discloses an enlargement of fulcrum disclosed in figures 2a and 2b;

Figures 3a and 3b illustrates basically the clutch of figures 1a and 1b

Figure 4 is a travel-force diagram associated with figures 3a and 3b and figures 1a and 1b;

Figures 5a and 5b illustrates an exemplary diagram of a clutch not being part of the invention having a normally open configuration that is of the pushing and counter direct type;

Figures 6a and 6b illustrates an exemplary diagram of a clutch not being part of invention having a normally closed configuration that is of the pulling and counter direct type;

Figures 7a and 7b illustrates an exemplary diagram of a clutch not being part of the invention having a normally closed position, that is of a pushing and counter direct;

Figures 8a and 8b illustrates an exemplary diagram of a clutch not being part of the invention having a normally open position, that is of a pulling and direct type;

Figures 9a and 9b illustrates an exemplary diagram of a clutch not being part of the invention having a normally open position, that is of a pushing and direct type;

Figures 10a and 10b illustrates an exemplary diagram of a clutch not being part of the invention having a normally open configuration that is of the pulling and direct type;

Figures 11a and 11b illustrates an exemplary diagram of a clutch not being part of the invention having a normally closed configuration that is of the pulling type;

Figures 12a and 12b illustrates the principles of a further possibility to vary the lever ratio by forming the pivot surface according to the invention.

### DETAILED DESCRIPTION

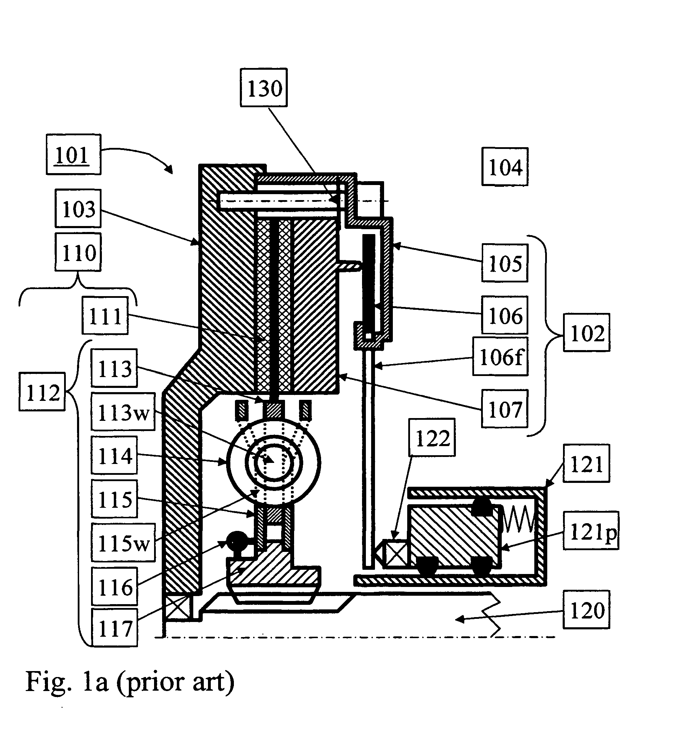

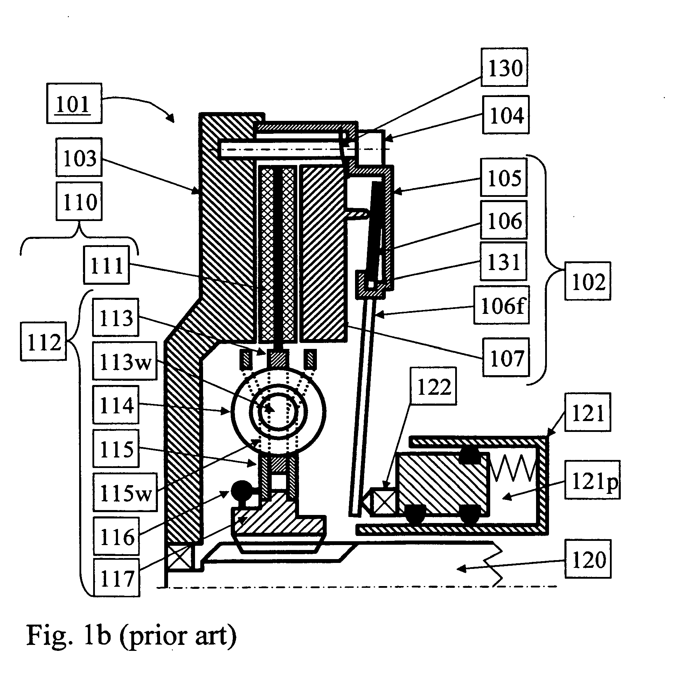

Figure 1a shows an example of a simplified longitudinal section of a single-disc dry plate clutch 101 of prior art in a normally closed (engaged position). The clutch is of a direct type. A direct type clutch has the moving pressure plate on the transmission side of said clutch. The shown example is a pushing type clutch, that is, where the clutch actuator pushes the levers of the diaphragm spring. Figure 1 discloses a clutch cover assembly 102 that is fastened to a flywheel 103 by means of screws 104. The clutch cover assembly 102 is composed of a clutch cover 105, a diaphragm spring 106 and a pressure plate 107. The diaphragm spring has fingers 106f extending radially inwards. These fingers can also be denominated clutch levers. A coupling device (not shown) rotationally connects the pressure plate 107 to the clutch cover 105 and allows a limited axial relative motion. Furthermore, there is a driven disc 110 that is composed of a clutch disc 111 and a damper hub 112. An inner plate 113 of the damper hub 112 is connected fixedly to the clutch disc 111. Spring packs 114 are carried in windows 113w in the inner plate 113. The spring packs 114 are also carried by outer plates 115 in corresponding windows 115w. Each spring pack 114 can be composed of at least one helical spring. The outer plates 115 are connected via a symbolically shown pre-damper 116 to an inner hub 117. Finally, the inner hub 117 is axially moveable but rotationally fixed to an input shaft 120 of a not shown transmission. The transmission is drivingly connected to driving wheels of the vehicle according to known art. The normally engaged position is accomplished by a leaf spring 130 that always tends to push the pressure plate towards the flywheel with a force F_{spring}. Several leaf springs can be spread out around and fixed with one end to the inner surface of the clutch cover and the other end of the leaf spring can extend radially inwards and apply said force F_{spring} on the pressure plate in an axial direction of the clutch.

The disclosed clutch 101 is controlled by an actuator 121 whose piston 121p via a release bearing 122 pushes the fingers 106f of the diaphragm spring 106 with a force F_{act} for counteracting the force of said leaf spring 130 and disengaging the clutch. Figure 1b shows the clutch 101 if figure 1 in a disengaged position. The clutch lever 106 is pivoting around a pivot point 131. Instead of an actuator 121 there can be a mechanical transmission (for example by wire or a link rod arrangement) of controlling force from for example a clutch pedal controlled by a driver of the vehicle.

The present invention solves a problem concerning slow clutch disengagement for a clutch arranged between an engine and a transmission in a vehicle.

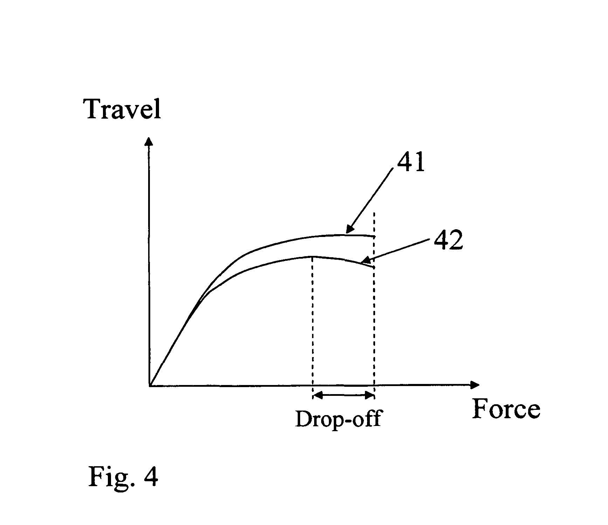

Additionally, the present invention further reduces or increases (which ever desired) the drop-off effect in a normal clutch. The drop-effect can be due to a diaphragm spring (clutch lever) characteristic in said clutch (see further below text connected to figure 4).

Further, according to the invention the clutch can be modified as to when said clutch levers pivot and cause said pressure plate to be squeezed against said clutch disc, said lever ratio and thus a clamping force applied by said clutch levers can be set to be higher than said clutch lever ratio present at a disengaged position wherein said clutch disc is disengaged, thereby enabling said clutch levers to maximize both the clamping force while said clutch disc is engaged and to maximize clutch lift clearance when said clutch disc is disengaged.

The present invention provides non-linear force during the clutch stroke, that could adapt to desired characteristics by the shape of the pivot surfaces.

The present invention is to be able to change the ratio over stroke on a clutch (pressure plate) very fast.

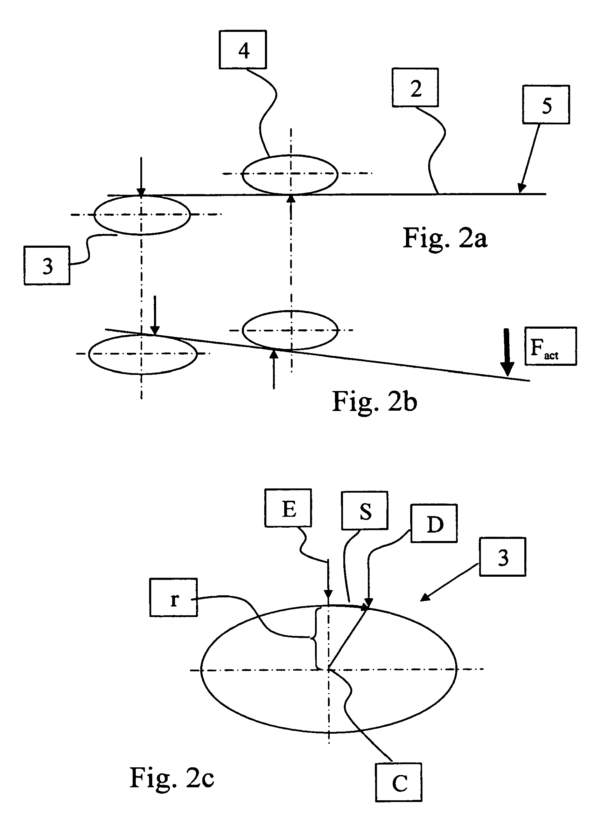

The shape of the pivot surfaces makes the ratio change over stroke. Exact geometry for the pivot surfaces (shape of the pivot surfaces) will be changed according to desired properties in a specific type of clutch. The figures 2a, 2b, 5a to 12b described herein disclose a half section of a clutch and where the geometrical rotational center of the clutch is to the right in mentioned figures, basically perpendicular to the clutch lever. Thus, in these figures the clutch actuator pushing/pulling point is always the point furthest to the right in the respective disclosed embodiment.

Figures 2a and 2b disclose with simple figures basic principles not part of the invention. The straight line in the figure is a clutch lever 2 and two ovals 3 and 4 are symbolizing two different fulcrums around which the clutch lever 2 pivots. Applied on said clutch 101, the clutch actuator 121 would then act on a point 5 positioned to the right of the clutch lever 2. Thus, the fulcrum 4 would correspond to a pivot surface fixed to the clutch cover 105 and the fulcrum 3 would correspond to the pivot surface fixed to the pressure plate 107. Figure 2a discloses the engaged position of the clutch. In figure 2b the disengaged position is disclosed and here an actuator force is depicted F_{act,} which pivots the clutch lever. As can be seen the contact points between the clutch lever and the fulcrums 3 and 4 changes when the clutch levers pivots from engaged position to disengaged position. The distance between the point 5 and the contact point of fulcrum 4 increases whereas the distance between the contact points of said fulcrums 3 and 4 decreases, when going from engaged to disengaged clutch position. Thus, if the actuator acts with the same amount of force during the pivoting of the clutch lever the force acting on the pressure plate will increase during the stroke due to the variable lever ratio (defined as distance between position 3 and 5 divided with distance between 3 and 4) that varies during the stroke. How the lever ration varies is dependent of the shape of the pivot surfaces of fulcrums 3 and 4 respectively.

The pivot surface can be defined as a surface with a starting point and an end point on the fulcrum. Figure 2c discloses an enlargement of fulcrum 3. A radius r measured from the geometrical centre C of the fulcrum 3 to the pivot surface S can define the position of the pivot surface in the different contact points that occurs during the stroke. Note that the clutch lever performs a rolling action over the pivot surface when going from engaged to disengaged clutch position. The different positions with belonging radius put together defines the shape S of the pivot surface. Thus, S is a function of radius r along said contact points. In the shown example starting point E corresponds to the engaged clutch position and ending point D corresponds to the disengaged clutch position. As can be seen in the shown example the amount of the radius increases during said stroke, that is, when going from E to D. Since in this example the fulcrum 4 has the same (but upside down) pivot surface shape form as said fulcrum 3 the corresponding increase of the radius occurs. In an alternative embodiment only one of the fulcrums 3 or 4 can have the modified pivot surface S. The effect would then be decreased. The element fixed to the actuator which is in contact with said clutch lever in said point 5 is preferably made with as small radius as possible in order to minimize the decrease of the distance between the contact point of fulcrum point 3 and contact point 5, when the clutch lever pivots from engaged to disengaged position.

Thus, the clutch levers perform a rolling action over said pivot surface S, defined by said radius r and the magnitude of at least one of said radius varies along said pivot surface in order to have a lever ratio of said clutch levers that varies during said pivot movement of the clutch levers.

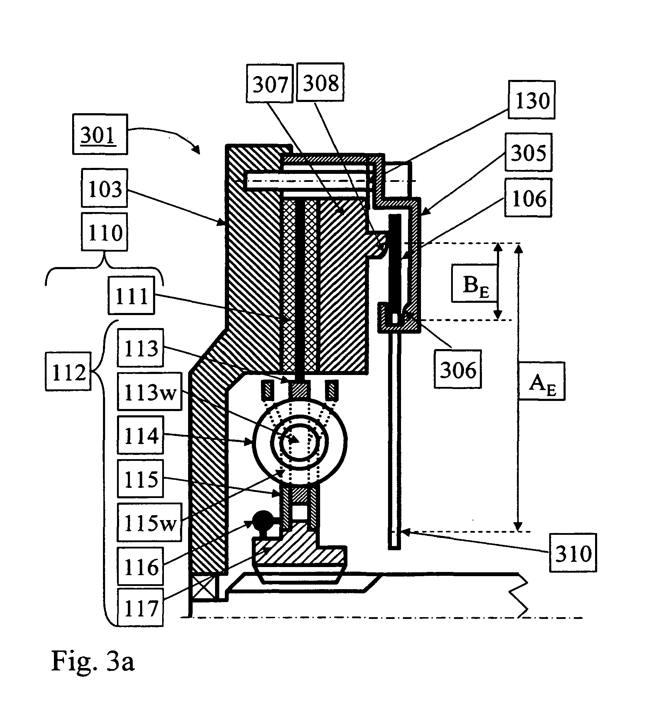

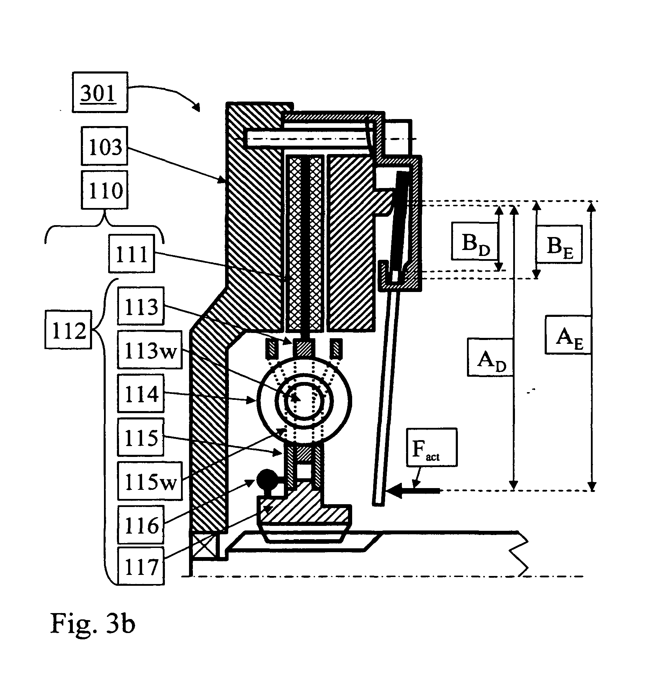

Below are further embodiments (figures 3-11) not part of the invention applied on different types of clutches.

In figures 3a and 3b, the clutch is a normally closed clutch and is of a push type. The disclosed clutch 301 has many parts in common with the clutch 101 (see figures 1a and 1b). The parts that have been modified, as disclosed in figures 2a to 2c, are pressure plate 307 and clutch cover 305. Further the actuator 121 and its part has been removed . The actuator has been replaced by a force arrow F_{act} when the actuator is active (see figure 3b). In figure 3 a the clutch is in an engaged position and in figure 3b the clutch is in the disengaged position. Thus, the pressure plate 307 has a modified pivot surface 308 and the clutch cover 305 has a corresponding modified pivot surface 306. The lever ratio in the engaged clutch position is the distance A_{E} divided by the distance B_{E}, where A_{E} is the distance between the prevailing contact point on the pressure plate and the contact point 310 of the here not visible actuator 121. Thus, the radii in this embodiment are varied so that when following a contact point in said rolling action between said clutch lever and said belonging pivot surface during a clutch stroke from engaged to disengaged position said magnitude of said radius is continuously increasing. Also here the radius of the element fixed to said actuator and in contact with the clutch lever in contact point 310 is made with as small radius as possible. Therefore the possible movement of this contact point 310 when going from engaged to disengaged clutch position can be neglected.

Figure 3b discloses the same clutch 301 in disengaged position. When in disengaged position the distance A_{E} will decrease slightly to corresponding distance A_{D}, whereas the distance B_{E} will decrease even more to corresponding distance B_{D}. Thus, lever ratio A_{E} /B_{E} will vary by increasing to A_{D} / B_{D}. When the clutch is engaged, the lever ratio is small. When the clutch is disengaged, the lever ratio is large, allowing for changing the characteristics for lower force in the end of stroke, which makes it easier to keep the disengaged position at for example red traffic light, that is, less force from the actuator is needed for keeping the disengaged position.

Figure 4 disclose a travel-force diagram where the upper curve 41 represents the clutch characteristics of clutch 101 (figures 1a and 1b) and the lower curve 42 represents the clutch characteristics of clutch 301 (figures 3a and 3b). In the diagram a clutch is engaged when travel and force is zero. When the actuator applies force to the clutch lever in order to disengage the clutch the force from the clutch lever (diaphragm spring) applied on the pressure plate increases according to said diagram. The pressure plate travels according to the diagram from the engaged position (zero travel) to the disengaged position. As can be seen curve 41 has no or very little drop off at the end of the curve (disengaged clutch position). Curve 42 represents the characteristic of a clutch corresponding to clutch 301 where the drop off is increased when the pressure plate comes to the disengaged position. An increased drop off for this type of clutch (101, 301) decreases the force needed from the actuator in order to keep the disengaged position. The lever ratio characteristics can be changed as desired.. It would be possible to increase the force in normally closed clutches and lower the force in normally open clutches if wanted.

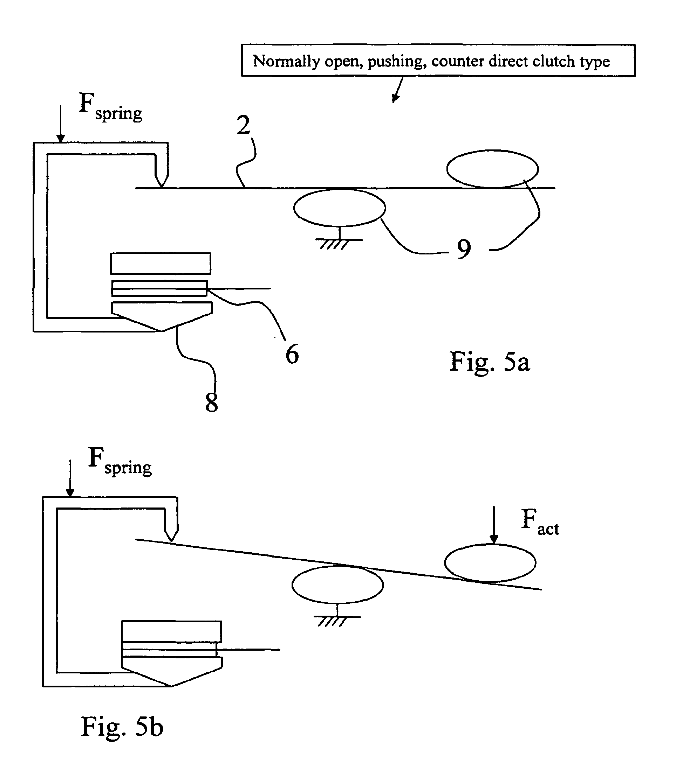

Normally open clutches will have the advantage of a higher force in the disengaged position. A further advantage is when an increased force is desired in order to achieve a faster disengagement. This can result in faster gear shifts. Examples of normally open clutches are illustrated in figures 5a, 5b, 8a to 10b. In each of the respective figures, a clutch lever 2, a clutch not being part of disc or lamella 6, pressure plate 8 and fulcrums 9 shaped not part of the invention is included. A force from a spring corresponding to the spring 130 in fig 1a/1b is depicted F_{spring} and a force from an actuator corresponding to actuator 121 in figures 1a/1b is depicted F_{act}.

In figures 5a and 5b (not part of the invention), the clutch is a normally open clutch and is of a pushing and counter direct type. In figure 5a the clutch is in a disengaged position and in figure 5b the clutch is in the engaged position. The radii in this embodiment are varied so that when following a contact point in said rolling action between said clutch lever and said belonging pivot surface during a clutch stroke from disengaged to engaged position said magnitude of said radius is continuously increasing. As mentioned an advantage is when an increased force is desired in order to achieve a faster disengagement. Faster gear shifts can be achieved.

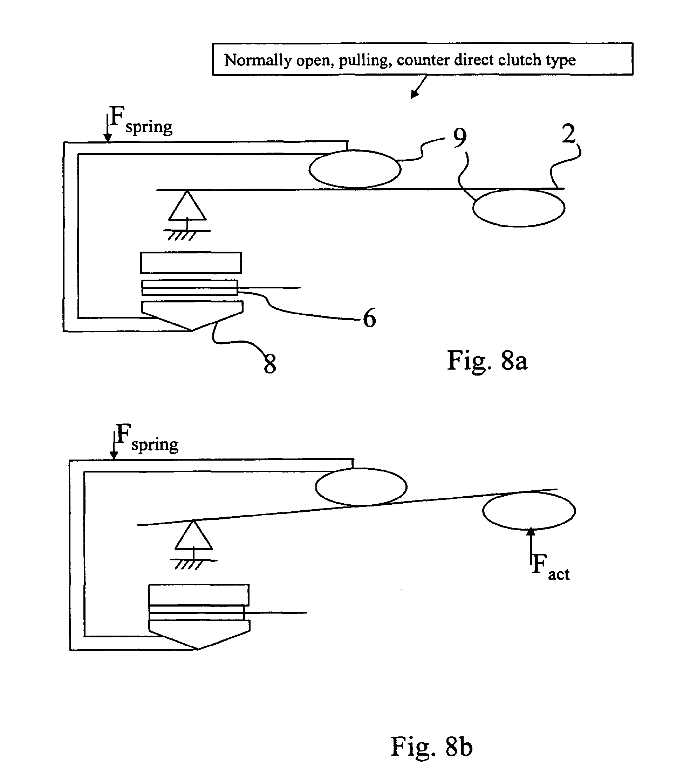

In figures 8a and 8b (not part of the invention), the clutch is a normally open clutch and is of a pulling and counter direct type. In figure 8a the clutch is in a disengaged position and in figure 8b the clutch is in the engaged position. The radii in this embodiment are varied so that when following a contact point in said rolling action between said clutch lever and said belonging pivot surface during a clutch stroke from disengaged to engaged position said magnitude of said radius is continuously increasing. As mentioned an advantage is when an increased force is desired in order to achieve a faster disengagement. Faster gear shifts can be achieved.

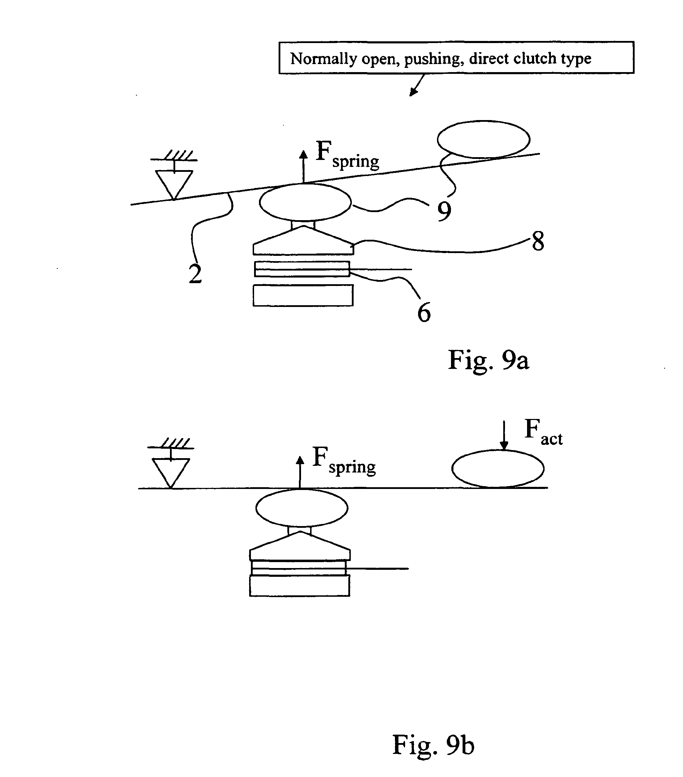

In figures 9a and 9b (not part of the invention), the clutch is a normally open clutch and is of a pushing and direct type. In figures 9a the clutch is in a disengaged position and in figure 9b the clutch is in the engaged position. The radii are varied so that when following a contact point in said rolling action between said clutch lever and said belonging pivot surface during a clutch stroke from disengaged to engaged position said magnitude of said radius is continuously decreasing. As mentioned an advantage is when an increased force is desired in order to achieve a faster disengagement. Faster gear shifts can be achieved.

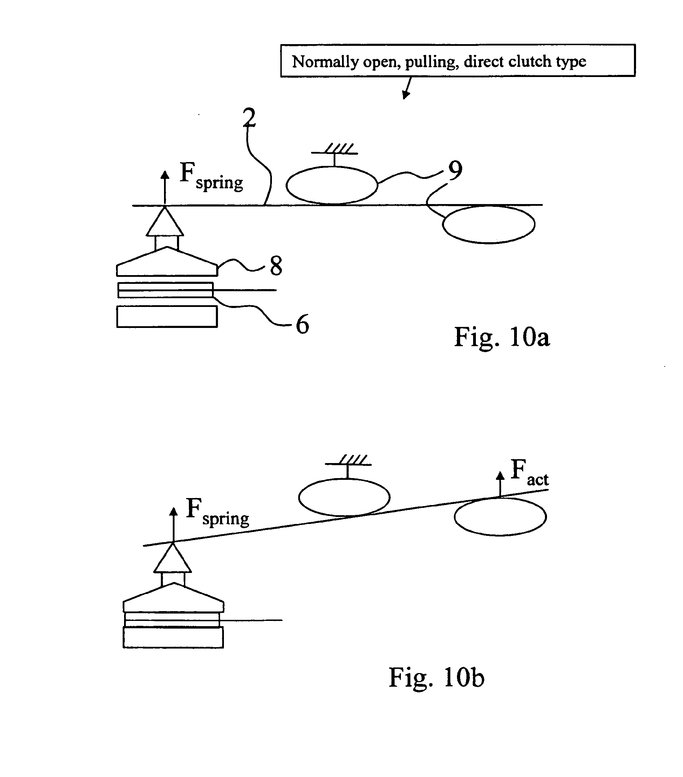

In figures 10a and 10b (not part of the invention), the clutch is a normally open clutch and is of a pulling and direct type. In figure 10a the clutch is in a disengaged position and in figure 10b the clutch is in the engaged position. The radii in this embodiment are varied so that when following a contact point in said rolling action between said clutch lever and said belonging pivot surface during a clutch stroke from disengaged to engaged position said magnitude of said radius is continuously increasing. As mentioned an advantage is when an increased force is desired in order to achieve a faster disengagement. Faster gear shifts can be achieved.

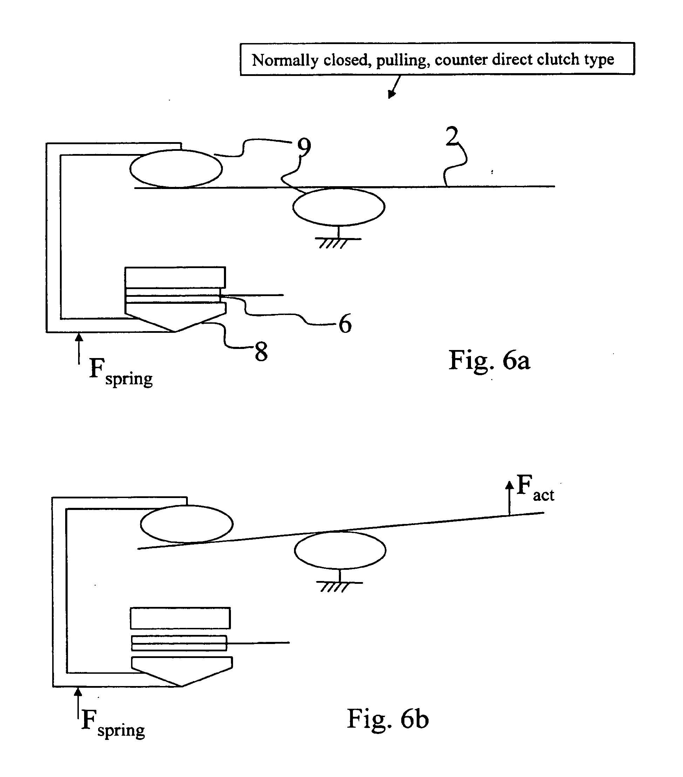

Normally closed clutches can have the advantage of lower force in disengaged position due to the change in ratio during a stroke. Examples of normally closed clutches are illustrated in figures 6a to 7b, 11a and 11b not part of the invention (and above already described 3a and 3b). In each of figures 6a to 7b, 11a and 11b, a clutch lever 2, a clutch disc or lamella 6, pressure plate 8 and fulcrums 9 shaped is included. A force from a spring corresponding to the spring 130 in figures 1a/1b is depicted F_{spring} and a force from an actuator corresponding to actuator 121 in figures 1a/1b is depicted F_{act}.

In figures 6a and 6b, the clutch is a normally closed clutch and is of a pulling and counter direct type. In figure 6a the clutch is in an engaged position and in figure 6b the clutch is in the disengaged position. The radii in this embodiment are varied so that when following a contact point in said rolling action between said clutch lever and said belonging pivot surface during a clutch stroke from engaged to disengaged position said magnitude of said radius is continuously increasing. This will decrease the force over the stroke.

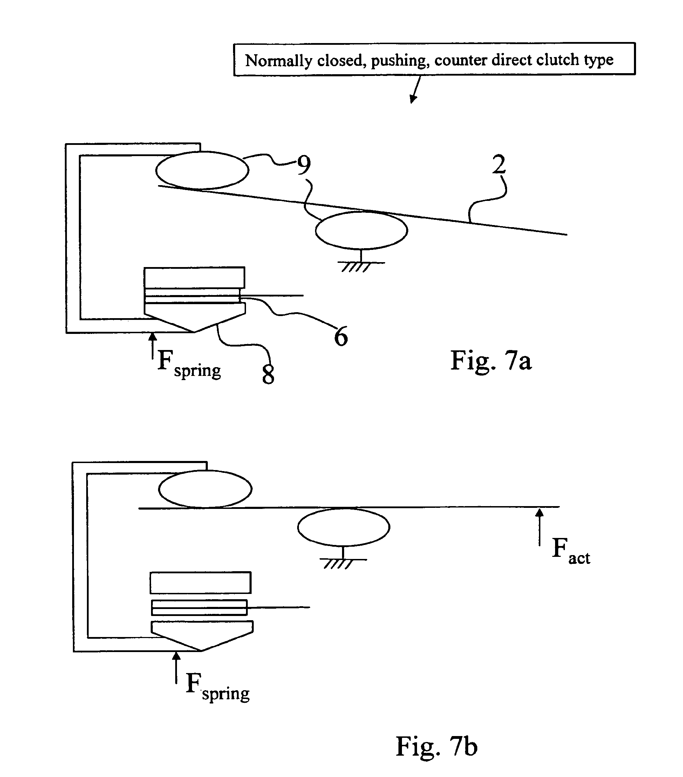

In figures 7a and 7b (not part of the invention), the clutch is a normally closed clutch and is of a pushing and counter direct type. In figure 7a the clutch is in a engaged position and in figure 7b the clutch is in the disengaged position. The radii in this embodiment are varied so that when following a contact point in said rolling action between said clutch lever and said belonging pivot surface during a clutch stroke from engaged to disengaged position said magnitude of said radius is continuously decreasing. This will decrease the force over the stroke.

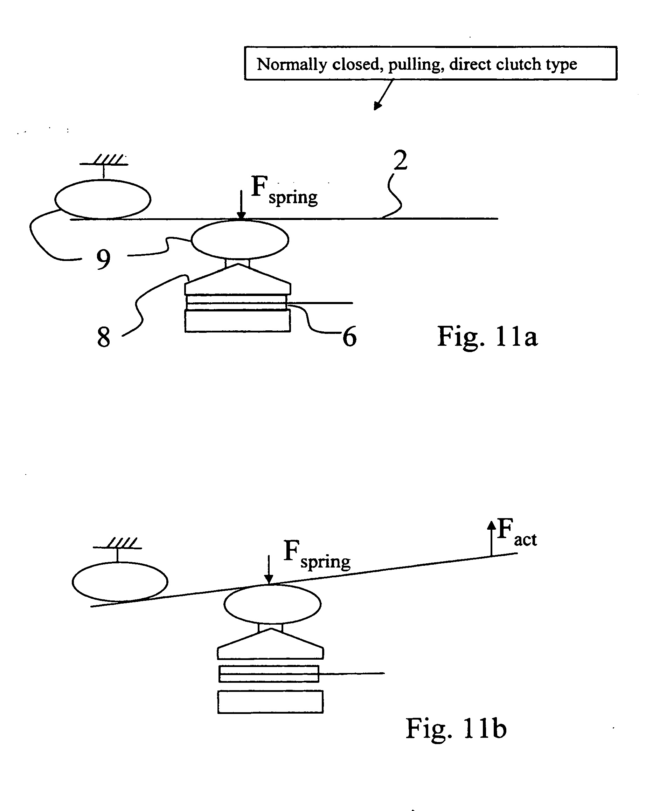

In figures 11a and 11b, the clutch is a normally closed clutch and is of a pulling and direct type. In figure 11a the clutch is in an engaged position and in figure 11b the clutch is in the disengaged position. The radii in this embodiment are varied so that when following a contact point in said rolling action between said clutch lever and said belonging pivot surface during a clutch stroke from engaged to disengaged position said magnitude of said radius is continuously increasing. In the embodiment of figures 11a and 11b the drop-off effect is increased thus the actuator force F_{act} for holding the clutch in the disengaged position can be lowered.

The contact surfaces and or contact points disclosed in the different figures can be designed in different ways to achieve the desired characteristics. According to the invention a possible solution is to use an uncontinuous pivot surface shape, as disclosed below.

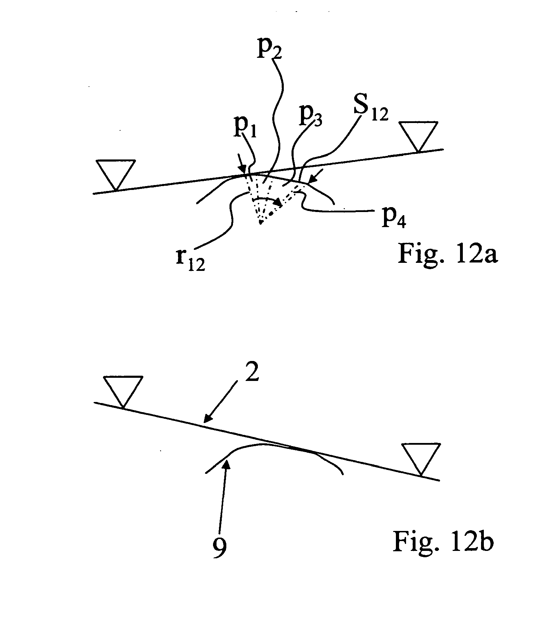

According to the invention and as illustrated in figures 12a and 12b, the present disclosure also contemplates that in at least one example embodiment, a pivot surface has a shape where the magnitude of said radius is varied so that when following a contact point in said rolling action between said clutch lever 2 and said belonging pivot surface S₁₂ (of a fulcrum 9) during a clutch stroke from disengaged to engaged position or from engaged to disengaged position (start and end point is marked with an arrow in the figure 12a) said magnitude of said radius r₁₂ is during a first part p₁ of said stroke constant, during a second part p₂ of said stroke continuously decreasing, during a third part p₃ of said stroke increasing and during a fourth and last part p₄ of said stroke constant. Depending of the type of clutch either disclosed fulcrums can be actuator, pressure plate or element fixed to a clutch cover. This could be used when you need a very quick change of ratio increase or decrease of force over a stroke.

The invention should not be deemed to be limited to the embodiments described above, but rather a number of further variants and modifications are conceivable within the scope of the following patent claim. For example the invention can be applied on dual clutches. Said clutch lever can be only a lever and the spring functionality of a diaphragm spring can be converted to a separate spring, as in for example US6805228.

## Claims

1. A vehicle clutch comprising:
at least one clutch disc (111, 6) to be selectively brought into and out of engagement; a moveable pressure plate (307, 8) to selectively squeeze said at least one clutch disc into and out of engagement in order to drivingly connect and disconnect a propulsion unit to driving wheels;
a plurality of clutch levers (106, 2) to selectively cause said pressure plate to move;
an actuator (121) to cause said pressure plate to move by pivoting said clutch levers; where each of said clutch levers are pivotable around:
- a first fulcrum (306, 9), which is part of an element firmly attached to said clutch housing;
- a second fulcrum (308, 9), which is part of an element firmly attached to said pressure plate,
- and a third fulcrum (122, 310, 9), which is part of an element firmly attached to said actuator;
where a pivot surface (S, S₁₂) of each of said fulcrums around which said clutch levers pivot with a rolling action over said pivot surface is defined by a radius (r, r₁₂),
which measures from a geometrical centre (C) in each of said fulcrums and out to said pivot surface,
and where a magnitude of at least one of said radius varies along said pivot surface in order to have a lever ratio of said clutch levers that varies as said clutch levers pivot,
**characterized in that** said radius where the magnitude varies is varied so that when following a contact point in said rolling action between said clutch lever and said belonging pivot surface during a clutch stroke from disengaged to engaged position or from engaged to disengaged position said magnitude of said radius is during a first part (p₁,p₄) of said stroke constant, during a second part (p₂, p₃) of said stroke continuously decreasing, during a third part (p₂, p₃) of said stroke increasing and during a fourth and last part (p₁, p₄) of said stroke constant.

## Patentansprüche

1. Fahrzeugkupplung mit
wenigstens einer Kupplungsscheibe (111, 6), die wahlweise in und außer Eingriff gebracht werden kann,
einer bewegbaren Druckplatte (307, 8), die wahlweise die wenigstens eine Kupplungsscheibe in und außer Eingriff drücken kann, um eine Antriebseinheit mit Antriebsrädern antriebsmäßig zu koppeln und zu entkoppeln,
einer Vielzahl von Kupplungshebel (106, 2), die wahlweise eine Bewegung der Druckplatte verursachen,
einem Stellglied (121), das eine Bewegung der Druckplatte durch Schwenken der Kupplungshebel verursacht, wobei jeder der Kupplungshebel verschwenkbar ist, um
- eine erste Drehachse (306, 9), die Teil eines Elements ist, das fest an dem Kupplungsgehäuse angebracht ist,
- eine zweite Drehachse (308, 9), die Teil eines Elements ist, das fest an der Druckplatte angebracht ist,
- und eine dritte Drehachse (122, 310, 9), die Teil eines Elements ist, das fest an dem Stellglied angebracht ist,
wobei eine Schwenkfläche (S, S₁₂) jeder der Drehachsen, um die die Kupplungshebel mit einer Wälzbewegung über die Schwenkfläche schwenken, durch einen Radius (r, r₁₂) definiert ist, der von einem geometrischen Zentrum (C) in jeder der Drehachsen und nach außen zu der Schwenkfläche misst, und
wobei eine Größe des wenigstens einen Radius entlang der Schwenkfläche variiert, um ein Hebelverhältnis der Kupplungshebel zu haben, das variiert, wenn die Kupplungshebel schwenken, **dadurch gekennzeichnet, dass** der Radius bei Variierung der Größe so variiert, dass, wenn man einem Kontaktpunkt bei der Wälzbewegung zwischen dem Kupplungshebel und der zugehörigen Schwenkfläche während eines Kupplungshubes aus einer Nichteingriffs- in eine Eingriffsposition oder aus einer Eingriffs- in eine Nichteingriffsposition folgt, die Größe des Radius während eines ersten Teils (p₁, p₄) des Hubes konstant ist, während eines zweiten Teils (p₂, p₃) des Hubes fortlaufend geringer wird, während eines dritten Teils (p₂, p₃) des Hubes größer wird und während eines vierten und letzten Teils (p₁, p₄) des Hubes konstant ist.

## Revendications

1. Embrayage de véhicule comprenant :
au moins un disque d'embrayage (111, 6) pour être amené sélectivement en contact et hors de contact ;
une plaque de pression mobile (307, 8) pour pousser sélectivement le au moins un disque d'embrayage en contact et hors de contact afin d'embrayer et débrayer de manière menante une unité de propulsion à des roues motrices ;
plusieurs leviers d'embrayage (106, 2) pour amener sélectivement la plaque de pression à se déplacer ;
un actionneur (121) pour amener la plaque de pression à se déplacer en faisant pivoter les leviers d'embrayage ;
où chacun des leviers d'embrayage est pivotant autour :
- d'un premier pivot (306, 9), qui est une partie d'un élément fixé de manière ferme sur le boîtier d' embrayage ;
- d'un deuxième pivot (308, 9) qui est une partie d'un élément fixé de manière ferme sur la plaque de pression ;,
- et d'un troisième pivot (122, 310, 9) qui est une partie d'un élément fixé de manière ferme sur l' actionneur ;
où une surface de pivotement (S1, S2) de chacun des pivots autour desquels les leviers d'embrayage pivotent avec une action de roulement sur la surface de pivotement est définie par un rayon (r, r₁₂), qui s'étend à partir d'un centre géométrique (C) de chacun des pivots et jusqu'à l'extérieur de la surface de pivotement,
et où une amplitude d'au moins un des rayons varie le long de la surface de pivotement afin d'avoir un rapport de levier des leviers d'embrayage qui varie lorsque les leviers d'embrayage pivotent,
**caractérisé en ce que** le rayon où l'amplitude varie est modifié de sorte que lorsque après un point de contact dans l'action de roulement entre le levier d'embrayage et la surface de pivotement concernée pendant une course d'embrayage depuis une position débrayée jusqu'à une position embrayée ou
depuis une position embrayée jusqu'à une position débrayée l'amplitude du rayon est constante pendant une première partie (p₁, p₄) de la course, diminue de manière continue pendant une seconde partie (p₂, p₃) de la course,
augmente pendant une troisième partie (p₂, p₃) de la course et est constante pendant une quatrième et dernière partie (p₁, p₄) de la course.
